# EUROPEAN PATENT APPLICATION

(11) **EP 4 786 695 A1**
(43) Date of publication of application: **05.08.2026**
(21) Application number: 26155360.6
(22) Date of filing: 30.01.2026
(51) Int. Cl.: E03D 11/14, F16B 2/24, F16B 5/06

(54) **KIT FOR FIXING SANITARYWARE, SYSTEM COMPRISING SAID KIT, AND ASSEMBLY METHOD**

(30) Priority: 03.02.2025 IT 202500001908
(71) Applicant: Sanitea S.R.L., 05100 Terni (IT)
(72) Inventor: CUCCINIELLO, Daniele, 05100 Terni (IT); CHIODI, Riccardo, 05100 Terni (TR) (IT)
(74) Representative: Mannucci, Michele

(57) **Abstract**

Fixing kit comprising: a first fixing element, adapted to be fixed to the wall; a first coupling member adapted to be fixed to the sanitaryware; wherein the first coupling member is adapted to cooperate with the first fixing element to secure the sanitaryware to the wall; and a first drilling template adapted to be temporarily secured to the first coupling member and provided with an adhesive surface, adapted to adhere to the wall.

## Description

### TECHNICAL FIELD

The present invention relates to improvements to the devices or kit for fixing sanitaryware, such as in particular WC bowls and bidet and to the relating methods. Specifically, the present invention relates to the fitting of floor-standing sanitaryware.

### BACKGROUND ART

Sanitaryware, such as WC bowls and bidets, may be wall-hung or floor-standing. In the first case, the sanitaryware is anchored to a vertical wall through brackets embedded under the cladding of the wall, and to which there are integrally joined anchoring bars. In the second case, the sanitaryware is placed on the floor, so that the weight of the sanitaryware and of the user sitting thereon is discharged on the floor. In this case, there is no need for providing systems capable of supporting the load of the sanitaryware and of the user, but there still arises the need to lock the sanitaryware with respect to the floor so that it does not move during use.

In some cases, the sanitaryware is simply glued using silicone glue between the sanitaryware and the floor or between the sanitaryware and the wall. This anchoring system is rather rudimental and it causes serious drawbacks when the sanitaryware is to be moved, for example for repairing piping.

In other cases, the sanitaryware has horizontal edges designed to rest on the floor, which have through holes for the through-passing of screws which are engaged in expansion plugs inserted into the floor. The anchoring screws remain visible outside the sanitaryware.

WO2020058276 discloses a kit for anchoring sanitaryware to the floor. This system comprises a pair of brackets which can be fixed to a fixing structure, for example wall or floor mounted. Each bracket has a first fin with a first edge, along which there are arranged a first recess and a first bevel extending from a second edge of the first fin up to the first recess. Furthermore, the kit provides for a pair of members for fixing to a sanitaryware. Each fixing member comprises a pin configured to be inserted into a recess of a corresponding of said brackets.

EP3006635 discloses a different fixing kit, in which two elastic arms are wall-fixed and cooperate with undercuts provided on the sanitaryware. The arms are fixed to the wall using anchoring bases, which act as a guide for the sanitaryware for a correct positioning. This kit is complex and expensive, and furthermore it does not allow fitting tolerances, and it therefore requires a high installation precision.

CN 111396430 discloses a system for wall-mounting a sanitaryware, which comprises a pair of elastic clips designed to be directly fixed to a vertical wall through an expansion plug. The clips cooperate with two with two shaped plates fixed to the wall of the sanitaryware. The system is very difficult to use given that the clips and the plates should be fixed extremely accurately on the vertical wall and on the two lateral walls and on the side walls of the sanitaryware. Even minor assembly errors result in the impossibility of anchoring the sanitaryware to the wall, given that the clips cannot couple the plates fixed to the sanitaryware. In the event of inaccurate fitting the plates and/or the clips have to be removed and the assembly work resumes afresh.

EP4060136 discloses a fixing kit for wall-anchoring a sanitaryware, comprising an anchoring element adapted to be anchored to a vertical wall, which forms a linear guide, and a pair of elastic clips, which can be fixed to the anchoring element in adjustable positions along the linear guide formed by the anchoring element. The kit further comprises a pair of pins adapted to be fixed to the sanitaryware and each adapted to cooperate with one of the elastic clips. The sanitaryware is wall-fixed by approaching a rear surface of the sanitaryware, in whose proximity the two pins have been attached, to the vertical wall, so that the pins snap into the elastic clips of the anchoring element. This system is particularly efficient, but has some drawbacks, including the difficulty in drilling holes in the correct position on the vertical wall used for wall-fixing the anchoring element. These holes should be drilled in a specific position so that the pins are correctly engaged with the two clips of the anchoring element.

Embodiments disclosed herein have the object of overcoming the drawbacks of the assembly kits of the prior art. In particular, some embodiments have the object of facilitating the drilling of holes in the wall in the correct position.

### SUMMARY

According to a first aspect, a fixing kit for wall-anchoring a floor-standing sanitaryware is provided, comprising: a first fixing element adapted to be fixed to the wall; a first coupling member adapted to be fixed to the sanitaryware. wherein the first coupling member is adapted to cooperate with the first fixing element to secure the sanitaryware to the wall; and a first drilling template adapted to be temporarily secured to the first coupling member and provided with an adhesive surface, adapted to adhere to the wall.

The drilling template is temporarily applied to the coupling member. The drilling template and the coupling member are fixed to the sanitaryware. The sanitaryware is approached to the wall and, thanks to an adhesive applied on the drilling template, for example a double-sided adhesive tape, the template remains adhered to the wall while the sanitaryware is removed. The drilling template is used at this point to drill holes which are used for wall-anchoring the coupling member, for example by means of expansion plugs. The sanitaryware is once again approached to the wall and the coupling member is secured to the wall-fixing element, ensuring a sufficient retention strength of the sanitaryware to the vertical wall. In advantageous embodiments, there is a double kit, for obtaining an anchoring point on each side of the sanitaryware.

The present invention also relates to a floor-standing sanitaryware and a fixing kit as defined above and described in the various embodiments below.

The sanitaryware may comprise two lateral sides, each lateral side having a transverse hole configured to fix a respective coupling member to the sanitaryware.

The kit disclosed herein allows to implement a method for the floor-mounting of a sanitaryware that is particularly efficient, simple and precise. The method comprises the following steps:
applying to the sanitaryware at least one first coupling member, to which a first drilling template comprising an adhesive surface is secured, the first coupling member and the first drilling template being positioned on the sanitaryware so that the adhesive surface of the first drilling template is approximately flush with and parallel to a rear surface of the sanitaryware, designed to be faced toward a wall when the sanitaryware is installed;
approaching the sanitaryware to the wall until the adhesive surface of the first drilling template comes into contact with the wall and the first drilling template is made to adhere to the wall;
moving the sanitaryware away from the wall, causing detachment of the first drilling template from the first coupling member, the first drilling template remaining adhered to the wall;
drilling at least one first hole on the wall with the aid of the first drilling template;
applying to the wall a first fixing element using said at least one first hole;
approaching the sanitaryware to the wall again, and coupling the first coupling member to the first fixing element.

Further advantageous features and embodiments of the kit and of the method according to the present invention are described below and set forth in the attached claims.

### BRIEF DESCRIPTION OF THE DRAWINGS

The invention will be clearer from the description and the attached drawings, which illustrate embodiments of the invention provided by way of non-limiting example. More particularly, in the drawings:
Figs.1 and 2 show exploded views of the components of a kit according to the invention;
Figs.3, 4, 5 and 6 show a sequence of operations for applying components of the kit to a sanitaryware;
Fig.7 shows an axonometric view of a wall with couplings for a sanitaryware before applying coupling members of the sanitaryware to the wall;
Figs. 8, 9, 10, 11 and 12 shows axonometric views of the members for wall-coupling the sanitaryware and for installing the sanitaryware against the wall; and
   Fig.13 shows an axonometric view from the rear, with the wall removed, of the assembled sanitaryware.

### DETAILED DESCRIPTION

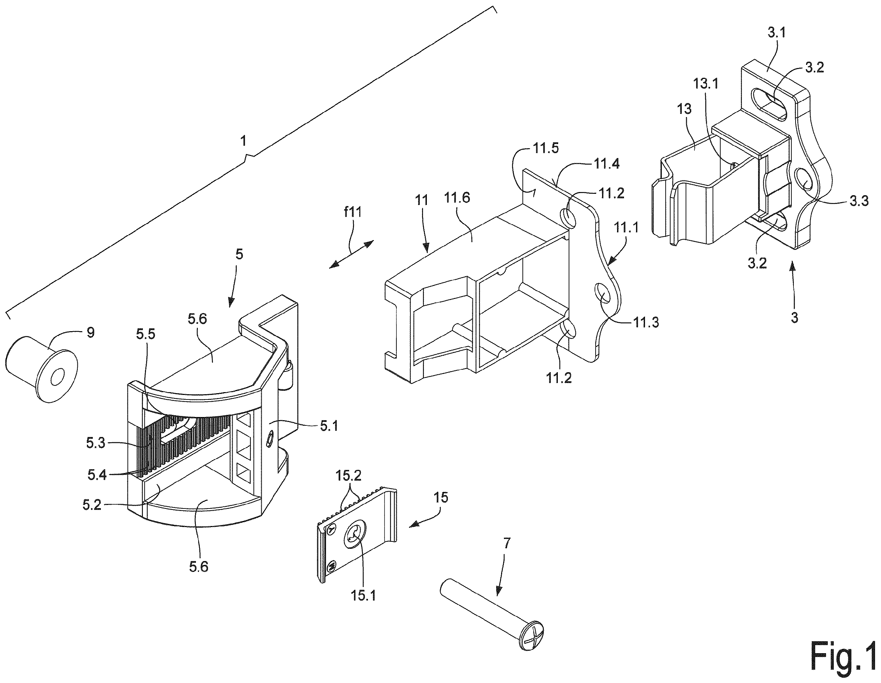

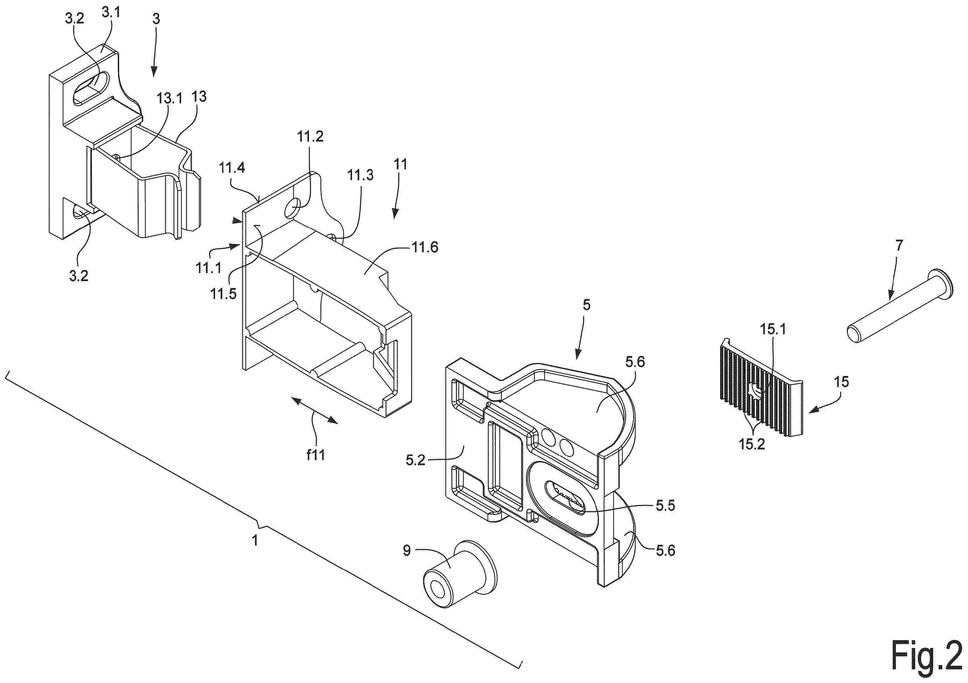

Figs.1 and 2 show, in axonometric view and from two different angles, some components of a fixing kit for wall-anchoring a floor-standing sanitaryware, for example a toilet bowl or a bidet. More specifically, Figs. 1 and 2 show a first group of elements, while a complete kit preferably comprises two groups of elements identical to each other, that is comprising the same elements or components. Basically, a complete kit comprises two of each element shown in Figs. 1 and 2.

In Fig. 1, the kit, indicated with 1, comprises a first fixing element 3, adapted to be fixed on a wall, against which there should be placed the sanitaryware, which is wall-fixed. The kit further comprises a first coupling member 5 adapted to be fixed to the sanitaryware. In some embodiments, the coupling member is fixed to the sanitaryware by means of a screw 7 which is screwed in an expansion plug 9, adapted to be housed in a hole of the sanitaryware, for example formed during the casting of the ceramic. The first coupling member 5 is adapted to cooperate, as described herein, with the first fixing element 3, to secure the sanitaryware to the wall. The kit 1, further comprises a first drilling template 11, adapted to be temporarily secured to the first coupling member 5 and provided with an adhesive surface, adapted to adhere to the wall, as described in greater detail below.

As mentioned, in preferred embodiments, the kit actually also comprises a second drilling template, equal to the first drilling template, a second fixing element, equal to the first fixing element, and a second coupling member, equal to the first coupling member. The second components of the kit 1 are not shown in Fig.1.

Each fixing element 3 may in turn comprise a base 3.1, which may comprise one or more through openings 3.2, 3.3 into which assembly screws (not shown) for mounting the fixing element to the wall are inserted. In the illustrated embodiment, the through openings 3.2 are elongated, i.e., shaped in the form of slots, while the through opening 3.3 is circular. It cannot be excluded that the number, shape, or arrangement of the through openings may vary. For example, the device may include a single through opening, or two through openings, which may each be circular or elongated, such as slot-shaped.

In some embodiments, an elastic component, for example an elastic clip, indicated with 13, is fixed to each base 3.1. The elastic component 13 may comprise a hole 13.1, into which a screw or other connector may be inserted, for connecting the elastic component 13 to the respective base 3.1.

In some embodiments, the base 3.1 may be made of polymer material, i.e., made of plastic, while the elastic component 13 may be made of metal material, for example it may consist of an elastic metal strip, shaped to form an elastic clip. In some embodiments, the metal material may be harmonic steel.

However, there cannot be ruled out the possibility that also the base 3.1 be made of metal material, or the elastic component 13 be made of polymeric material, possibly reinforced.

In other embodiments, the elastic component 13 and the base 3.1 may be obtained as a single block, instead of as two separated or separable components. Providing the elastic component 13 and the base 3.1 separated and made of different materials may be advantageous, given that it allows to use materials that are most appropriate for the two functions that these elements are required to carry out, reducing the overall production costs while maximising the efficiency of the elements.

The coupling member 5 and the elastic component 13 are generally shaped to cooperate with one another, specifically to elastically and removably secure the coupling member 5 to the elastic component 13. In the illustrated embodiment, to this end, the coupling member 5 for example comprises a pin 5.1 or crosspiece which, in mounted configuration, is oriented so as to be push-inserted into the clip or other elastic component 13.

In some embodiments, the coupling member 5 further comprises a plate 5.2, which may have a flat rear surface adapted to rest on a surface of the sanitaryware when the coupling member 5 is fixed to the sanitaryware by means of the screw 7. The plate 5.2 may have an opposite knurled surface 5.3, that is provided with a knurling consisting of front teeth 5.4. A hole or opening 5.5 for the through-passing of the fixing screw 7 may extend through the plate 5.2. In the illustrated embodiment, the hole or opening 5.5 has an elongated shape, that is it is configured in the form of a slot, for facilitating the positioning of the coupling member 5 on the sanitaryware.

The knurling 5.4 is configured to cooperate with a plate 15, which has a through hole 15.1, for example a circular hole, and a knurling 15.2, complementary to the knurling 5.4. The through hole is adapted to allow the insertion of the screw 7. The knurling 5.4 and the knurling 15.2 cooperate with each other, during assembly, to distribute the pressure generated by the screw 7 when the latter is screwed to the sanitaryware through the expansion plug 9, and to hold the screw, the plate 15 and the coupling member 5 in position.

The plate 15 may be made of metal material. The coupling member 5 may be made of polymer material, that is plastic.

Two sides 5.6, to which the ends of the pin 5.1 are secured, extend from the plate 5.2.

The drilling template 11 and the coupling member 5 are configured so that the drilling template 11 may be coupled to the coupling member 5 and temporarily secured thereto, and removed therefrom with a movement orthogonal to the pin 5.1 and parallel to the plate 5.2, indicated with the double arrow f11. This movement corresponds to the movement for approaching the sanitaryware to the wall during assembly, as clarified below.

In some embodiments, the drilling template 11 comprises a plaque 11.1 with through holes 11.2, 11.3 arranged in positions corresponding to the holes or through openings 3.2, 3.3 of the base 3.1 of the fixing element 3. The plaque 11.1 comprises two opposite surfaces, indicated with 11.4 and 11.5. The surface 11.4 is provided with an adhesive, to allow the temporary application of the drilling template 11 to a vertical wall. The adhesive may consist of a double-sided tape with a removable film for protecting the adhesive applied on the exposed surface of the double-sided tape, i.e., the surface of the bi-adhesive opposite to the one applied to the surface 11.4. From the surface 11.5 of the plaque 11.1 there protrudes a tang 11.6 shaped so that it can be engaged to the coupling member 5, with a mutual movement according to f11.

Still with reference to Figs. 1 and 2, Figs. 3 to 13 show how the kit 1 is used to install a sanitaryware 17 on the floor against a vertical wall.

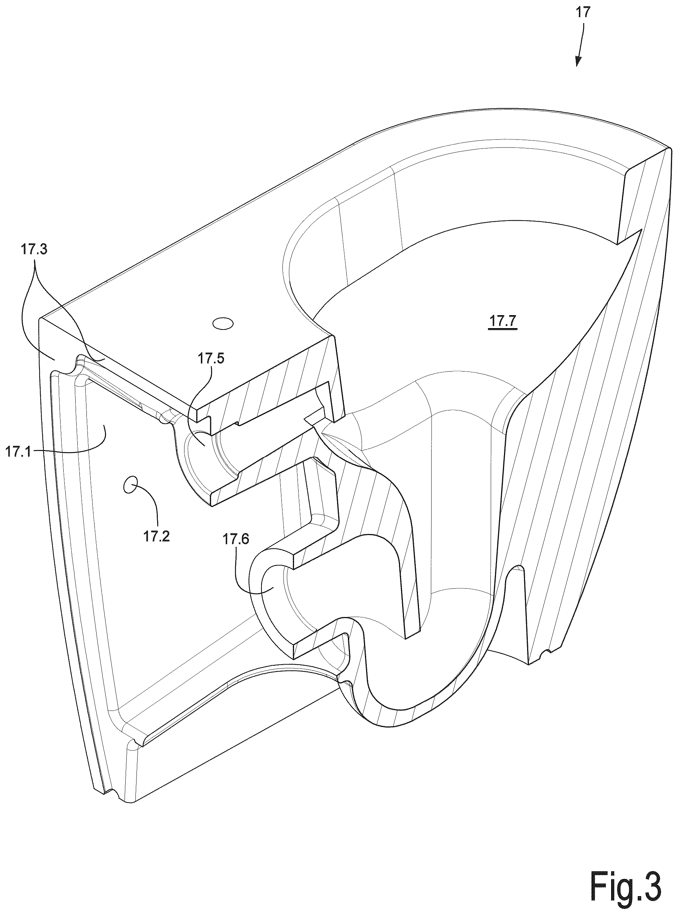

More particularly, Figs. 3 to 6 show, in a cross-sectional axonometric view, the steps for installing a first part of the kit 1 on the sanitaryware 17. The latter is shown cut according to a vertical symmetry plane. One of the two sides of the sanitaryware 17, in this case consisting of a toilet bowl, is indicated with 17.1. Similar methods of installation may be used for mounting a bidet.

Each side 17.1 of the sanitaryware 17 is provided with a hole 15.2, advantageously a blind hole, not visible from outside the sanitaryware 17. If the sanitaryware 17 is made of ceramic, the hole 17.2 may be generated directly in the ceramic during the molding step. Each hole 17.2 is used to mount several components of the kit 1.

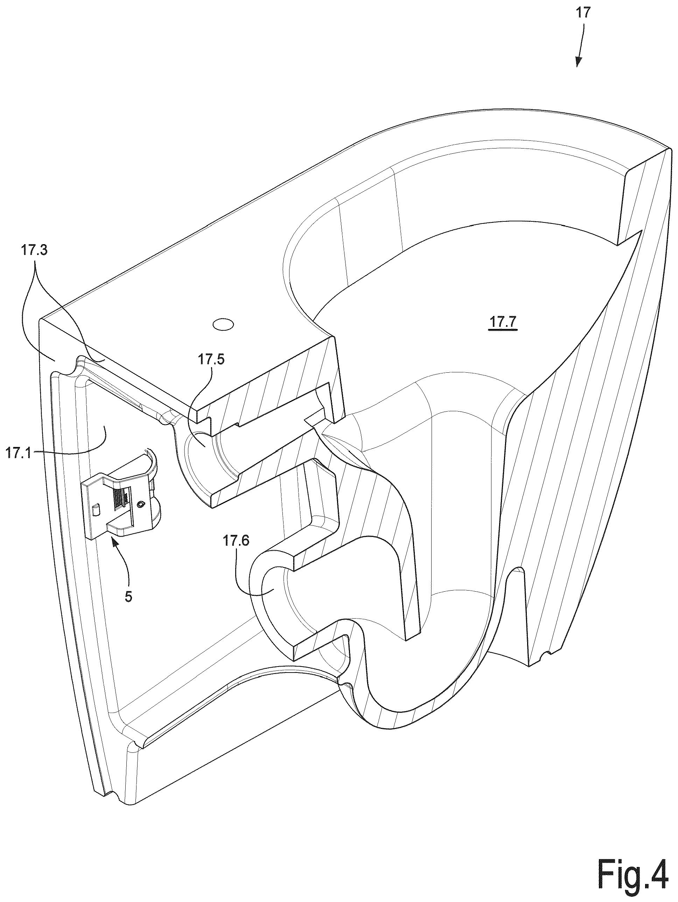

Specifically, Fig. 4 shows how, through the blind hole 17.2, a respective coupling member 5, is fixed on the inner surface of each side 17.1. Fixing is obtained by firstly inserting the expansion plug 9 into the blind hole 17.2 and then approaching the respective coupling member 5 with the plate 15 and then screwing the screw 7 into the expansion plug 9, making it pass through the holes or through openings 15.1 and 5.5.

Any inaccuracies in drilling the blind hole 17.2, for example due to the wear of the mold which is used to produce the sanitaryware 17, may be compensated due to the elongated shape of the hole 5.5 of the coupling member and the engagement of the plate 15.

In alternative embodiments, the plate 15 may be omitted and the screw may cooperate with its head directly with a knurling formed on the coupling member 5. However, the use of a plate 15 is advantageous to obtain a better distribution of the clamping pressure.

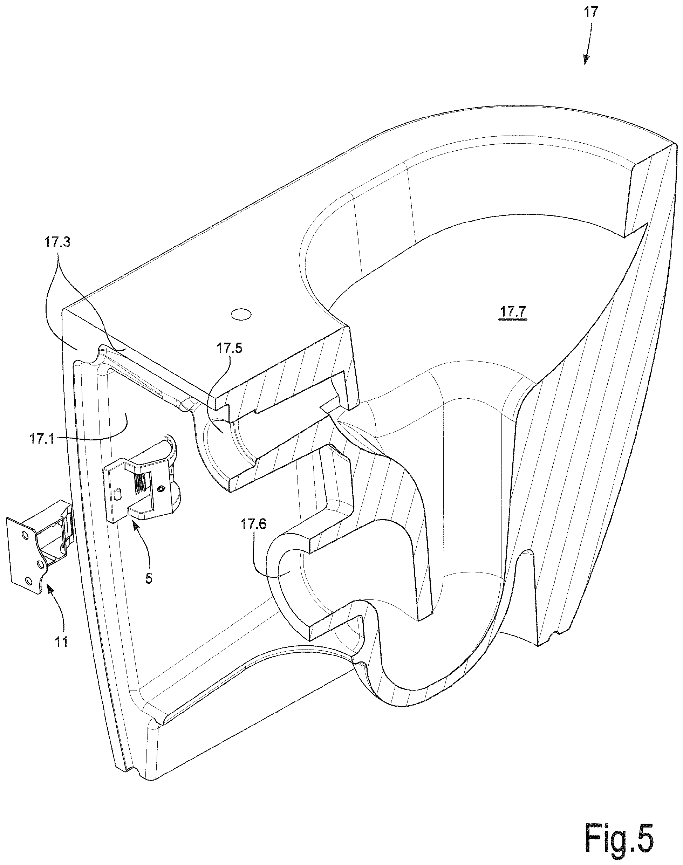

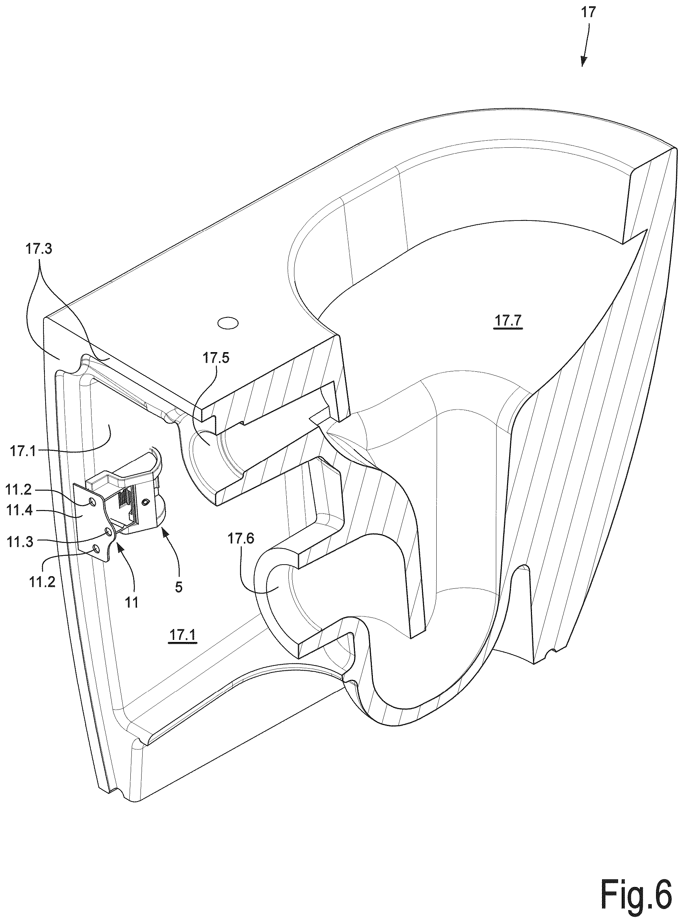

In the subsequent step, shown in Figs. 5 and 6, each drilling template is coupled with the respective coupling member 5, by inserting the tang 11.6 between the sides 5.6 and the pin or crosspiece 5.1. The position of the holes 17.2 with respect to a rear surface 17.3 of the sanitaryware 17 and the size of the drilling templates 11 and of the coupling member 5 are such that, in the assembled configuration, the adhesive surface 11.4 of each drilling template 11 is approximately coplanar to the rear surface 17.3 of the sanitaryware 17, or protruding slightly therefrom. In this step, the protection film which protects a layer of adhesive applied on the surface 11.4 of the drilling template 11 is removed from each surface 11.4.

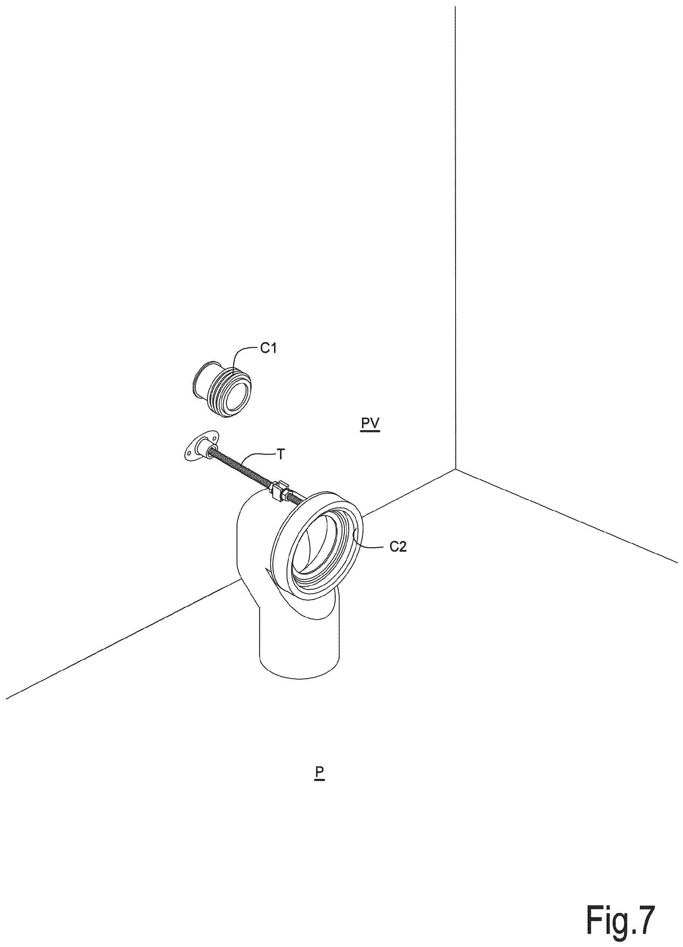

Fig.6 shows the assembly formed by the drilling template 11 and by the coupling member 5 mounted on the respective side 17.1 of the sanitaryware 17. The sanitaryware 17 thus set-up (with a similar drilling template 11 mounted on the other side, not visible, may be used to carry out the subsequent steps of the installation, which will be referred to in Figs.7 to 12 below).

Fig.7 shows schematically in an axonometric view a portion of a vertical wall PV against which the sanitaryware 17, mounted on the floor P, is placed.. Fig.7 shows the delivery C1 of the flush water, coming from a cistern or other tank, not shown, for example recessed in the vertical wall PV. The floor discharge is indicated with C2. A tie rod-strut which fixes the discharge C2 with respect to the vertical wall PV, is indicated with T.

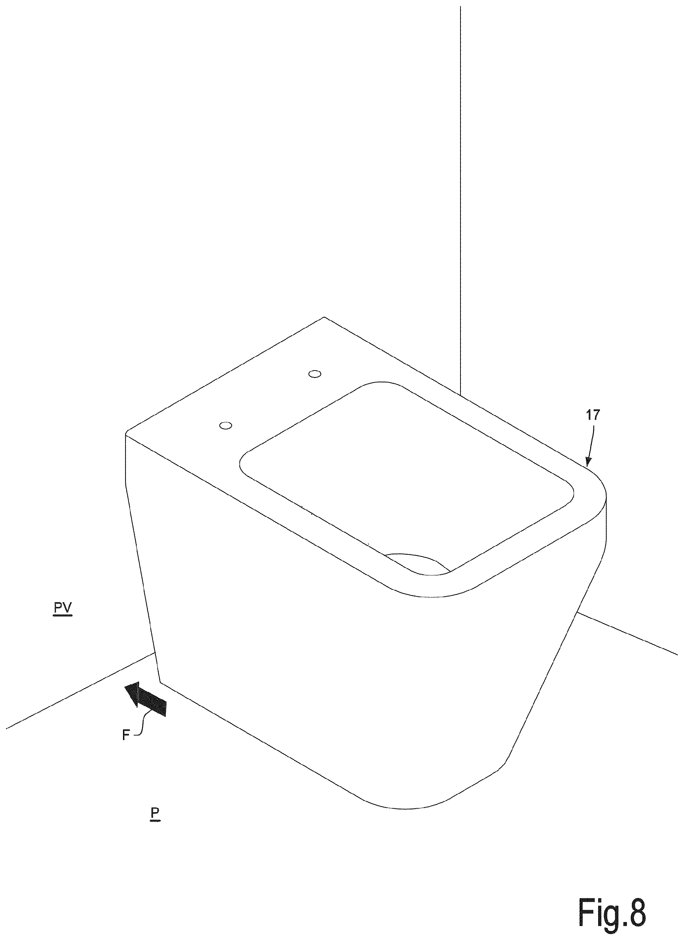

In order to assemble the sanitaryware 17, in a first step, shown in Fig.8, the sanitaryware 17 equipped with the drilling templates 11 applied on the two sides 17.1 as shown in Fig.6, is placed on the floor P facing the delivery C1 and the discharge C2 and pushed (arrow F in Fig.8) until it abuts against the vertical wall PV. With this movement, the surfaces 11.4 of the drilling templates 11 come into contact with the vertical wall PV and adhere thereto thanks to the adhesive applied on the surfaces 11.4.

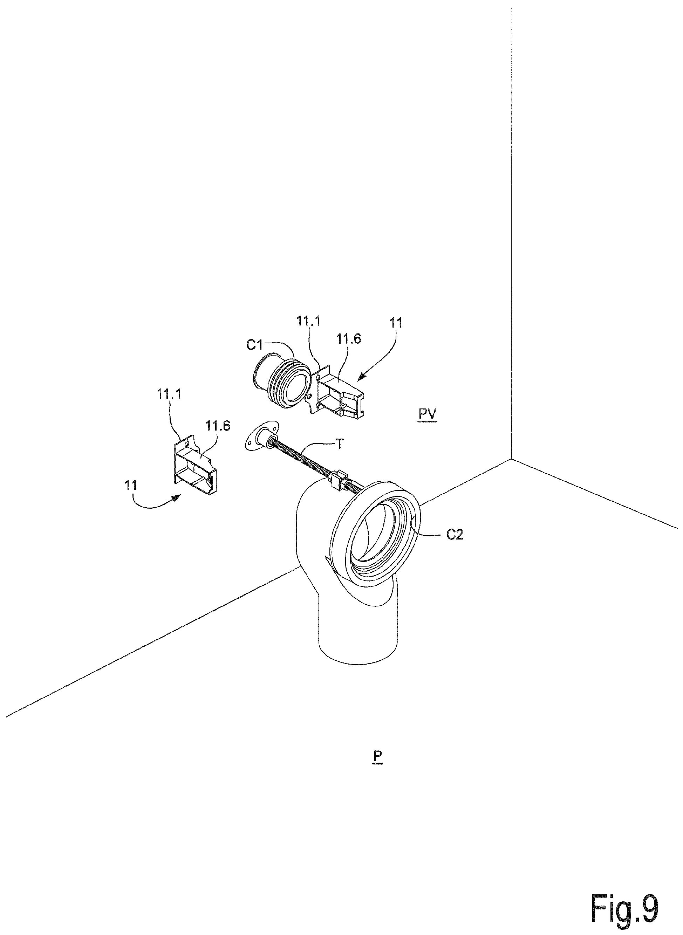

Moving the sanitaryware 17 away from the vertical wall PV with a movement in the direction opposite to the arrow F of Fig. 8, the two drilling templates 11 are removed from the coupling members 5 and remain adhered to the vertical wall PV as visible in Fig.9.

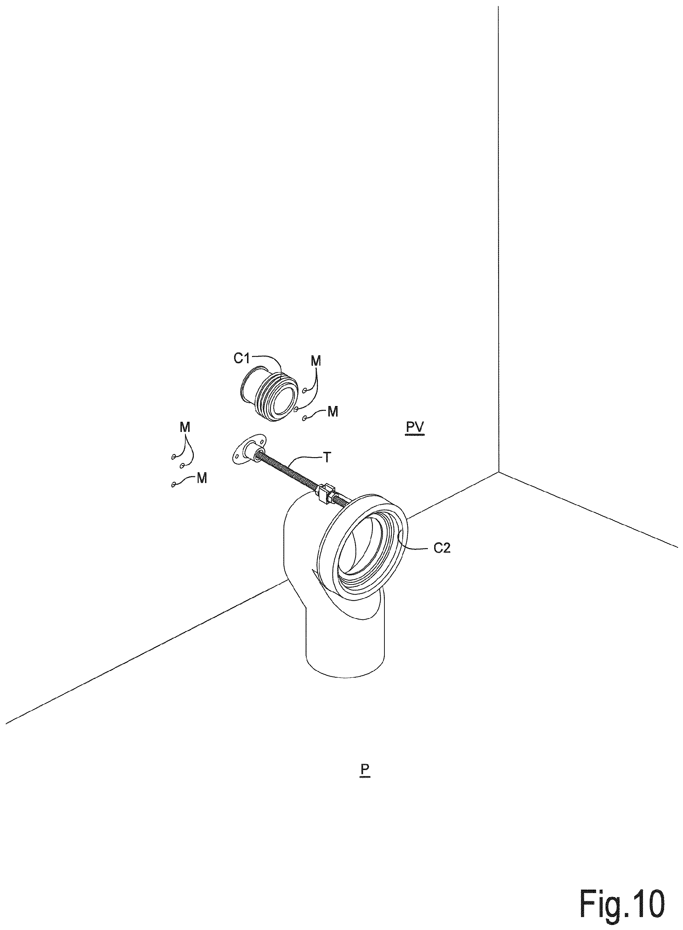

Subsequently to the removal of the sanitaryware 17, on the vertical wall PV the positions of the holes 11.2, 11.3 may be marked by means of a marker, for example a felt pen. Once the positions of the holes or openings 11.2, 11.3 have been marked, the drilling templates 11 may be detached from the vertical wall PV, on which the signs or markings previously made through the holes 11.2, 11.3 remain. In Fig.10 the six markings M provided through the drilling templates 11 are shown, after the drilling templates have been detached from the vertical wall PV.

At the markings M at this point there may be made an equal number of holes with a drill or similar tool, to anchor the fixing elements 3 to the vertical wall PV. To this end, upon making the holes, respective expansion plugs (not shown) are inserted thereinto and then the fixing elements 3 are approached so as to anchor them using screws (not shown) which are inserted using the through openings or holes 3.2, 3.3. These holes are in the same position as the through holes or openings 11.2, 11.3 of the drilling templates 11 and therefore, by using the drilling templates 11, the expansion plugs inserted into the holes made in the vertical wall PV are in the right position for the correct anchoring of the fixing elements 3. Openings or holes 3.2 with elongated shape on the fixing elements 3 allow to compensate for any errors when drilling the holes in the vertical wall PV.

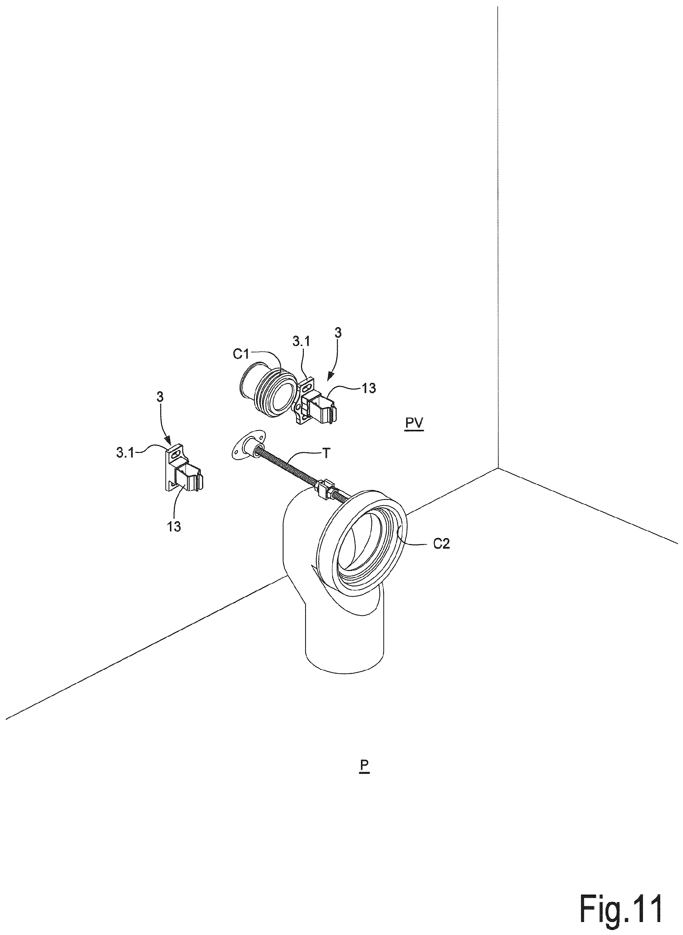

Fig.11 shows the fixing elements 3 applied to the vertical wall PV.

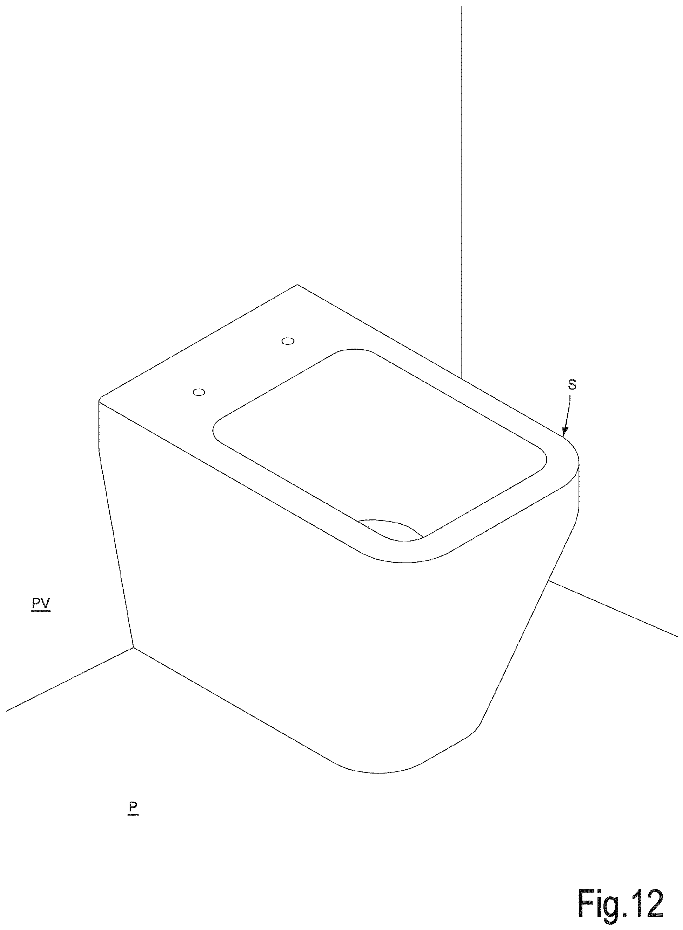

Thanks to the described method, the fixing elements 3 are arranged so that the elastic components or clips 13 are positioned precisely in the point where, once again approaching the sanitaryware 17 to the vertical wall PV, the pins or crosspieces 5.1 are located. Therefore, approaching the sanitaryware 17 to the vertical wall PV (Fig.12), the mechanical coupling between the pins or crosspieces 5.1 of the two coupling members 5 and the clips or elastic components 13 is obtained. The crosspieces or pins 5.1 may be shaped to form a guide element, so as to facilitate the mechanical coupling with the clips 13.

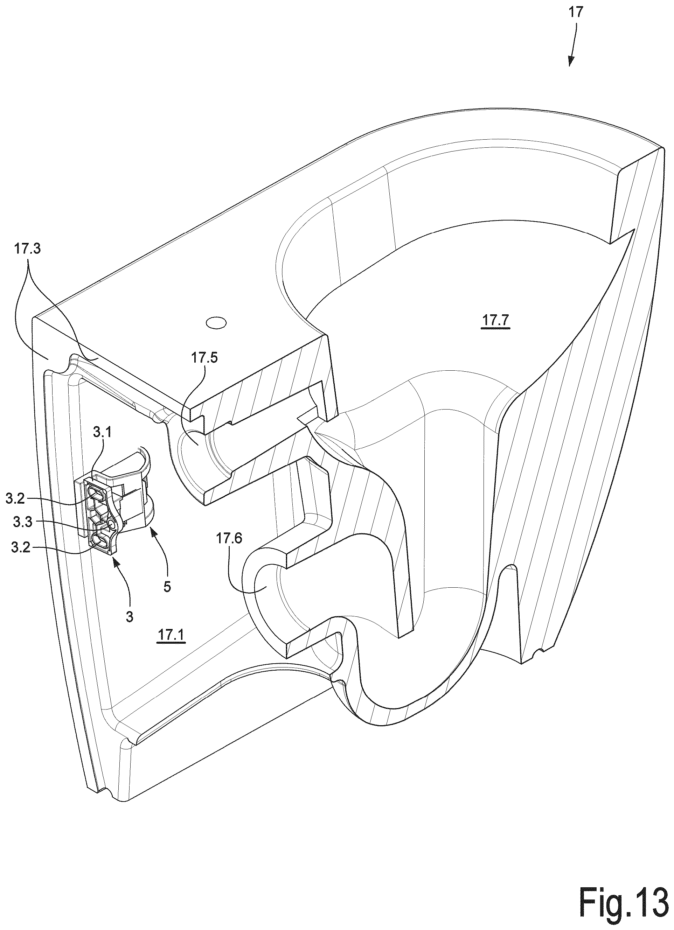

Fig.13 shows the sanitaryware 17 with the fixing elements 3 fitted into the coupling members 5, in an axonometric view taken from behind the sanitaryware 17, with the vertical wall PV removed.

With the same movement for approaching to the vertical wall PV the hydraulic coupling between the sanitaryware 17 and the fittings C1 and C2 is also obtained. More particularly, the fitting C1 engages a hole for the inflow of the water 17.5 of the sanitaryware 17 and the fitting C2 engages a discharge hole 17.6, which communicates, through a syphon, with a hole 17.7 of the sanitaryware 17.

With a kit 1 as described, a method for quick and precise installation of floor-standing sanitaryware may therefore be implemented, by approaching the sanitaryware to a vertical wall PV and engaging it to such wall through the interaction of the clips or other elastic components 13 with the pins or crosspieces 5.1.

It should be noted that the single components of kit described above and shown in the attached drawings may change in form and arrangement, maintaining the function thereof intact. For example, the mechanical coupling between the coupling members and the fixing elements may be obtained with a different arrangement of the mechanical components and/or inverting the mutual position thereof. For example, a substantially rigid pin may be provided as part of the fixing element, and an elastic component may be provided which is part of the coupling member. In other embodiments, an elastic component which has a shape different from the one shown may be provided for.

The foregoing description and the accompanying drawings illustrate only certain embodiments of the invention. It will be apparent to those skilled in the art that modifications, omissions, and additions may be made to the specific embodiments disclosed herein without departing from the scope of the invention as defined by the attached claims.

## Claims

1. A fixing kit for anchoring a floor-standing sanitaryware to a wall, comprising:
a first fixing element, adapted to be fixed to the wall;
a first coupling member adapted to be fixed to the sanitaryware; wherein the first coupling member is adapted to cooperate with the first fixing element to secure the sanitaryware to the wall;
a first drilling template adapted to be temporarily secured to the first coupling member and provided with an adhesive surface, adapted to adhere to the wall.

2. The fixing kit according to claim 1, further comprising:
a second fixing element adapted to be fixed to the wall;
a second coupling member adapted to be fixed to the sanitaryware; wherein the second coupling member is adapted to cooperate with the second fixing element to secure the sanitaryware to the wall;
a second drilling template adapted to be temporarily secured to the second coupling member and provided with an adhesive surface, adapted to adhere to the wall.

3. The fixing kit of claim 1 or 2, wherein each coupling member is adapted to be attachable to a respective drilling template, such that the drilling template can be removed from the coupling member by a translational movement parallel to the direction of mutual coupling between each fixing element and its respective coupling.

4. The fixing kit of one or more of the preceding claims, wherein each fixing element comprises a base with one or more through openings for the insertion of screws for fitting the element for fixing to the wall.

5. The fixing kit of claim 4, wherein at least one of said through openings has a slot shape.

6. The fixing kit of claim 4 or 5, wherein each through opening of the base corresponds to an opening in the drilling template.

7. The fixing kit of one or more of the preceding claims, wherein each fixing element comprises an elastic component, in particular an elastic clip, and each coupling member comprises a pin which adapted to be introduced into the elastic component.

8. The fixing kit of claim 4, wherein each fixing element comprises an elastic component, in particular an elastic clip, separated from the respective base and which can be fixed to the base through a connector; and wherein each coupling member comprises a pin adapted to be elastically engaged with the elastic component.

9. The fixing kit of one or more of the preceding claims, wherein each coupling member comprises a plate which can be fixed to the sanitaryware.

10. The fixing of claim 9, when dependent on at least claim 7, wherein the pin and the respective plate of each coupling member are formed in a single body, preferably made of polymer material.

11. The fixing kit according to claim 9 or 10, wherein the plate has a through hole for the insertion of a screw for anchoring to the sanitaryware.

12. The fixing kit of claim 11, wherein the hole of the plate has an elongated shape in a direction parallel to the direction of approach of the sanitaryware to the wall.

13. The fixing kit of claim 10 or 11, comprising an expansion plug designed to be inserted in the hole of the sanitaryware for anchoring the plate to the sanitaryware.

14. The fixing kit of claim 13, wherein each anchoring element comprises a pair of slots and preferably a circular hole for corresponding wall fixing screws.

15. A system comprising a floor-standing sanitaryware and a fixing kit according to one or more of the preceding claims.

16. The system of claim 15, wherein the sanitaryware comprises two lateral sides, each lateral side having a transverse hole configured to fix a respective coupling member to the sanitaryware.

17. A method for mounting a floor-standing sanitaryware, comprising the following steps:
applying to the sanitaryware at least one first coupling member, to which a first drilling template is secured comprising an adhesive surface, the first coupling member and the first drilling template being positioned on the sanitaryware so that the adhesive surface of the first drilling template is approximately flush with and parallel to a rear surface of the sanitaryware, configured to be faced toward a wall when the sanitaryware is installed;
approaching the sanitaryware to the wall until the adhesive surface of the first drilling template contacts the wall and the first drilling template is made to adhere to the wall;
moving the sanitaryware away from the wall, causing detachment of the first drilling template from the first coupling member, the first drilling template remaining adhered to the wall;
drilling at least one first hole on the wall with the aid of the first drilling template;
applying to the wall a first fixing element using said at least one first hole;
approaching the sanitaryware to the wall again, and coupling the first coupling member to the first fixing element.

18. The method of claim 17, wherein
a second coupling member is applied to the sanitaryware, to which a second drilling template is secured, comprising an adhesive surface, the second coupling member and the second drilling template being positioned on the sanitaryware so that the adhesive surface of the second drilling template is approximately flush with and parallel to the rear surface of the sanitaryware;
the adhesive surface of the second drilling template is brought into contact with the wall and made to adhere thereto when the sanitaryware is approached to the wall;
when the sanitaryware is moved away from the wall, the second drilling template separates from the second coupling member, the second drilling template remaining adhered to the wall;
at least one second hole is made on the wall with the aid of the second drilling template;
a second fixing element is applied to the wall using said at least one second hole; and
when the sanitaryware is approached to the wall again, the second coupling member is coupled to the second fixing element.

19. The method of claim 17 or 18, wherein the first hole and the second hole comprise a plurality of first holes and second holes, respectively.

20. The method of any of claims 17 to 19, wherein the step of making the holes on the wall comprises the step of: applying a marking on the wall by means of the respective drilling template; removing the drilling template; drilling the holes at the markings.
